# EUROPEAN PATENT APPLICATION

(11) **EP 3 421 939 A1**
(43) Date of publication of application: **02.01.2019**
(21) Application number: 18178663.3
(22) Date of filing: 19.06.2018
(51) Int. Cl.: G01C 23/00, G08G 5/00, B64D 43/00

(54) **SYSTEMS, DEVICES, AND METHODS FOR USING A MULTI-FUNCTION CONTROL AND DISPLAY UNIT (MCDU) COMMUNICATION ARCHITECTURE ONBOARD AN AIRCRAFT**

(30) Priority: 27.06.2017 US 201715634031
(71) Applicant: Honeywell International Inc., Morris Plains, NJ New Jersey 07950 (US)
(72) Inventor: SIVARATRI, Mahesh, Morris Plains, NJ New Jersey 07950 (US); MCCULLOUGH, Sue, Morris Plains, NJ New Jersey 07950 (US); BIDRUPANE, Sushma, Morris Plains, NJ New Jersey 07950 (US); RAMANNA, Prashanth, Morris Plains, NJ New Jersey 07950 (US); TOEWS, Phillip, Morris Plains, NJ New Jersey 07950 (US); KUMARI, Sanju, Morris Plains, NJ New Jersey 07950 (US); RANGU, Bhargavi, Morris Plains, NJ New Jersey 07950 (US); PATEL, Pranav, Morris Plains, NJ New Jersey 07950 (US)
(74) Representative: Houghton, Mark Phillip

(57) **Abstract**

A method for communicating using an architecture compatible with a multi-function control and display unit (MCDU) onboard an aircraft is provided. The method intercepts MCDU format communications transmitted by a plurality of avionics systems to the MCDU using a plurality of MCDU communication connections, by at least one processor; presents the intercepted MCDU format communications, via a graphical user interface (GUI) presented by a display device communicatively coupled to the at least one processor; receives user input data via the GUI, wherein the user input data comprises at least one of data entry, user selections, and user commands associated with the plurality of avionics systems; and transmits the user input data to the plurality of avionics systems using the plurality of MCDU communication connections, by a communication device communicatively coupled to the at least one processor.

## Description

### TECHNICAL FIELD

Embodiments of the subject matter described herein relate generally to providing an alternative user interface onboard an aircraft for a flight crew to interact with aircraft onboard avionics. More particularly, embodiments of the subject matter relate to interception, translation of MCDU communications for display to a user, and translation and communication of user input data via MCDU communication lines for interaction with avionics.

### BACKGROUND

Certain aircraft use a multi-function control and display unit (MCDU) as a user interface for cockpit avionics, including, without limitation: Flight Management System (FMS), Communications Management Function (CMF), radio, circuit breakers (CB), and the like. Onboard an aircraft, the MCDU is used by flight crew members to perform functions including flight planning, navigation, guidance, and performance. Due to the many and varied tasks associated with the MCDU, MCDU interaction time for the flight crew represents a large percentage of flight time during a trip.

Cockpit avionics application data is displayed on the MCDU using pages, lines, and data items. To interact with cockpit applications using the MCDU, flight crew members generally memorize pages where intended data is displayed and sequences of key presses to be performed to access a correct page associated with a particular cockpit application. Additionally, the MCDU page architecture may result in flight crew members being unaware of all available functionality supported by avionics systems onboard the aircraft.

Accordingly, it is desirable to provide one or more alternatives to the required memorization of pages and sequences of key presses to use an MCDU interface to interact with aircraft onboard avionics. Furthermore, other desirable features and characteristics will become apparent from the subsequent detailed description and the appended claims, taken in conjunction with the accompanying drawings and the foregoing technical field and background.

### BRIEF SUMMARY

Some embodiments of the present disclosure provide a method for communicating using an architecture compatible with a multi-function control and display unit (MCDU) onboard an aircraft. The method intercepts MCDU format communications transmitted by a plurality of avionics systems to the MCDU using a plurality of MCDU communication connections, by at least one processor; presents the intercepted MCDU format communications, via a graphical user interface (GUI) presented by a display device communicatively coupled to the at least one processor; receives user input data via the GUI, wherein the user input data comprises at least one of data entry, user selections, and user commands associated with the plurality of avionics systems; and transmits the user input data to the plurality of avionics systems using the plurality of MCDU communication connections, by a communication device communicatively coupled to the at least one processor.

Some embodiments of the present disclosure provide a computing device configured to communicate using an architecture compatible with a multi-function control and display unit (MCDU) onboard an aircraft. The computing device includes: a system memory element, configured to store MCDU translation data; a communication device configured to transmit and receive data using a plurality of MCDU communication connections; a display device configured to present a graphical user interface (GUI); and at least one processor communicatively coupled to the system memory element, the communication device, and the display device, the at least one processor configured to: intercept MCDU format communications transmitted by the plurality of avionics systems to the MCDU using the plurality of MCDU communication connections, via the communication device; present the intercepted MCDU format communications, via the graphical user interface (GUI); receive user input data via the GUI, wherein the user input data comprises at least one of data entry, user selections, and user commands associated with the plurality of avionics systems; and transmit, via the communication device, the user input data to the plurality of avionics systems using the plurality of MCDU communication connections.

Some embodiments of the present disclosure provide a system for communicating using an architecture compatible with a multi-function control and display unit (MCDU) onboard an aircraft. The system includes: a system memory element, configured to store MCDU translation data; a plurality of MCDU communication connections, configured to transmit data between the MCDU and a plurality of avionics systems; a plurality of interception connections, configured to connect the at least one processor to the plurality of MCDU connections; a communication device configured to transmit and receive data using the plurality of MCDU communication connections and the plurality of interception connections; a display device configured to present a graphical user interface (GUI); and at least one processor, communicatively coupled to the system memory element, the communication device, and the display device, the at least one processor configured to: intercept MCDU format communications transmitted by the plurality of avionics systems to the MCDU via the plurality of MCDU connections, using the plurality of interception connections; present the intercepted MCDU format communications, via the graphical user interface (GUI); receive user input data via the GUI, wherein the user input data comprises at least one of data entry, user selections, and user commands associated with the plurality of avionics systems; and transmit the user input data to the plurality of avionics systems using the plurality of interception connections and the plurality of MCDU connections.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is a system for providing an alternative user interface for multi-function control and display unit (MCDU) communications, in accordance with the disclosed embodiments;
FIG. 2 is a functional block diagram of a computing device, in accordance with the disclosed embodiments;
FIG. 3 is a diagram of a standard multi-function control and display unit (MCDU) interface, in accordance with the disclosed embodiments;
FIG. 4 is a diagram of multi-function control and display unit (MCDU) translation table, in accordance with the disclosed embodiments;
FIG. 5 is a diagram of a graphical user interface (GUI) configured to present multi-function control and display unit (MCDU) translation data, in accordance with the disclosed embodiments;
FIG. 6 is a flow chart that illustrates an embodiment of a process for initializing a system for communicating using an architecture compatible with a multi-function control and display unit (MCDU) onboard an aircraft, in accordance with the disclosed embodiments;
FIG. 7 is a flow chart that illustrates an embodiment of a process for communicating using an architecture compatible with a multi-function control and display unit (MCDU) onboard an aircraft, in accordance with the disclosed embodiments;
FIG. 8 is a flow chart that illustrates an embodiment of a process for presenting the intercepted multi-function control and display unit (MCDU) format communications, in accordance with the disclosed embodiments; and
FIG. 9 is a flow chart that illustrates an embodiment of a process for providing user input data to a plurality of avionics systems via the plurality of multi-function control and display unit (MCDU) communication connections, in accordance with the disclosed embodiments.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

The subject matter presented herein relates to systems, devices, and methods for replacing a multi-function control and display unit (MCDU) onboard an aircraft with a streamlined, user-friendly, and intuitive graphical user interface, while maintaining an existing architecture used for MCDU communications onboard the aircraft. In other words, the present disclosure enables avionics systems and avionics applications communicating with the MCDU continue to exchange data using a current communication architecture onboard the aircraft, as if communicating directly with the MCDU. However, such communications are intercepted (using MCDU input connections), translated, and presented via a graphical user interface (GUI), wherein the MCDU format communications were transmitted by one or more avionics systems onboard the aircraft to an MCDU device. The subject matter further includes details related to receiving, translating into an MCDU compatible format, and transmitting (via MCDU output connections) user input data to facilitate user interaction with the avionics systems.

Certain terminologies are used with regard to the various embodiments of the present disclosure. A multi-function control and display unit (MCDU) is an aircraft onboard device that provides a user interface for particular avionics systems onboard an aircraft, which may include a Flight Management System (FMS), Communications Management Function (CMF), radio, circuit breakers (CB), Takeoff And Landing (TOLD) function or other avionics systems. Flight crew members may use the MCDU interface to perform tasks associated with flight planning, navigation, guidance, and performance. MCDU format communications are data transmissions originating from one or more avionics systems onboard an aircraft, and are directed to an MCDU onboard the aircraft. The MCDU format communications are provided using a message format that the MCDU recognizes and is capable of interpreting. MCDU translation data is a stored set of conversion specification data used to translate a set of data from an MCDU compatible format into a format compatible with a graphical user interface (GUI) presented by a computing device, wherein the GUI is operable to present graphical elements (e.g., entry boxes, push buttons, check buttons, scrollable lists, pull down lists) and text associated with one or more avionics systems onboard the aircraft, and wherein the GUI is operable to receive user input data for user interaction with the avionics systems. In some embodiments, the MCDU translation data may be stored as a configurable database including at least MCDU screen layouts and formats.

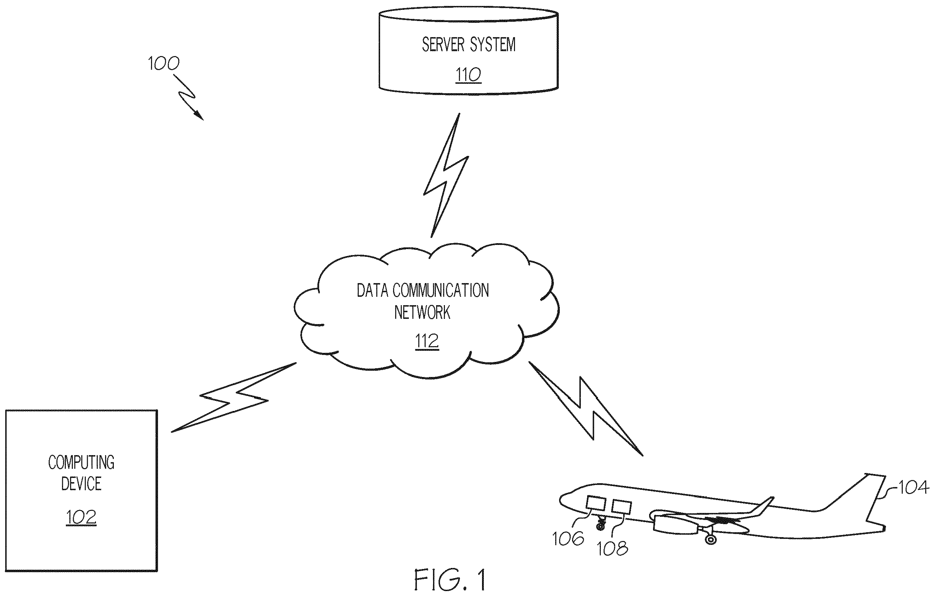

Turning now to the figures, FIG. 1 is a system 100 for providing an alternative user interface for multi-function control and display unit (MCDU) communications, in accordance with the disclosed embodiments. The system 100 operates to replace the multi-leveled architecture of an MCDU 106 interface with a streamlined and user-friendly graphical user interface (GUI). The system 100 may include, without limitation, a computing device 102 that communicates with one or more avionics systems 108 onboard the aircraft 104 and at least one server system 110, via a data communication network 112. In practice, certain embodiments of the system 100 may include additional or alternative elements and components, as desired for the particular application.

The computing device 102 functions to present a GUI to replace the MCDU 106 as the primary user interface for interacting with a plurality of avionics systems 108 onboard an aircraft 104. The computing device 102 may be implemented by any computing device that includes at least one processor, some form of memory hardware, a user interface, and communication hardware. In some embodiments, the computing device 102 may be implemented using a computer system onboard the aircraft 104, which is configured to present graphical elements and text associated with cockpit applications and avionics systems 108, and to receive user input selections, commands, and data entry associated with the cockpit applications and avionics systems 108. In other embodiments, the computing device 102 may be implemented using a personal computing device, such as a tablet computer, a laptop computer, a personal digital assistant (PDA), a smartphone, or the like. In this scenario, the computing device 102 is capable of storing, maintaining, and executing an Electronic Flight Bag (EFB) application configured to present graphical elements and text associated with cockpit applications and avionics systems 108, and to receive user input selections, commands, and data entry associated with the cockpit applications and avionics systems 108.

The aircraft 104 may be any aviation vehicle that uses an MCDU 106 as a primary user interface for flight crew interaction with the plurality of avionics systems 108 onboard the aircraft 104. The aircraft 104 may be implemented as an airplane, helicopter, spacecraft, hovercraft, or the like. The one or more avionics systems 108 may include a Flight Management System (FMS), Communications Management Function (CMF), radio, circuit breakers (CB), Takeoff and Landing (TOLD) function or the like. Data obtained from the one or more avionics systems 108 may include, without limitation: flight plan data, aircraft state data, weather data, brake system data, fuel and weights data, runway analysis data, aircraft performance data, or the like.

The server system 110 may include any number of application servers, and each server may be implemented using any suitable computer. In some embodiments, the server system 110 includes one or more dedicated computers. In some embodiments, the server system 110 includes one or more computers carrying out other functionality in addition to server operations. The server system 110 may store and provide any type of data used to translate MCDU format communications, which are data transmissions directed to the MCDU 106 onboard the aircraft 104, which are provided in a format that the MCDU 106 recognizes and is capable of interpreting. Such translation data may include, without limitation, MCDU screen layouts and MCDU screen formats, which define pages, lines, and data fields and data fields association with MCDU button pushes, allowed user interactions (e.g., user data entry, user data deletion, user data selection) on the data fields in the MCDU interface, and other data compatible with the computing device 102. MCDU translation data also includes navigation data for the MCDU page hierarchy.

The computing device 102 is usually located onboard the aircraft 104, and the computing device 102 communicates with the one or more avionics systems 108 via wired and/or wireless communication connection. The computing device 102 and the server system 110 are generally disparately located, and the computing device 102 communicates with the server system 110 via the data communication network 112 and/or via communication mechanisms onboard the aircraft 104.

The data communication network 112 may be any digital or other communications network capable of transmitting messages or data between devices, systems, or components. In certain embodiments, the data communication network 112 includes a packet switched network that facilitates packet-based data communication, addressing, and data routing. The packet switched network could be, for example, a wide area network, the Internet, or the like. In various embodiments, the data communication network 112 includes any number of public or private data connections, links or network connections supporting any number of communications protocols. The data communication network 112 may include the Internet, for example, or any other network based upon TCP/IP or other conventional protocols. In various embodiments, the data communication network 112 could also incorporate a wireless and/or wired telephone network, such as a cellular communications network for communicating with mobile phones, personal digital assistants, and/or the like. The data communication network 112 may also incorporate any sort of wireless or wired local and/or personal area networks, such as one or more IEEE 802.3, IEEE 802.16, and/or IEEE 802.11 networks, and/or networks that implement a short range (e.g., Bluetooth) protocol. For the sake of brevity, conventional techniques related to data transmission, signaling, network control, and other functional aspects of the systems (and the individual operating components of the systems) may not be described in detail herein.

During typical operation, the computing device 102 intercepts MCDU format communications transmitted from the avionics systems to the MCDU 106, and presents these communications via a GUI for user interaction. The computing device 102 also receives user input data that includes user selections, user commands, and data entry; "translates" the user input data into an MCDU format; and transmits the MCDU format user input data to the plurality of avionics systems 108 onboard the aircraft 104. Thus, the computing device 102 functions as a replacement to the MCDU 106 interface, and provides a user-friendly graphical interface for user interaction with the plurality of avionics systems 108 onboard the aircraft 104.

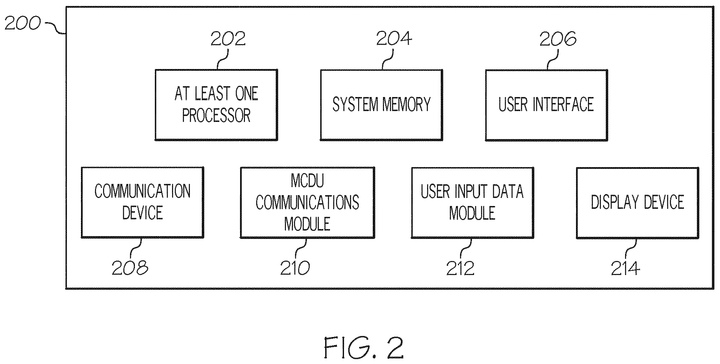

FIG. 2 is a functional block diagram of a computing device 200, in accordance with the disclosed embodiments. It should be noted that the computing device 200 can be implemented with the computing device 102 depicted in FIG. 1. In this regard, the computing device 200 shows certain elements and components of the computing device 102 in more detail.

The computing device 200 generally includes, without limitation: at least one processor 202; system memory 204; a user interface 206; a communication device 208; a multi-function control and display unit (MCDU) communications module 210; a user input data module 212; and a display device 214. These elements and features of the computing device 200 may be operatively associated with one another, coupled to one another, or otherwise configured to cooperate with one another as needed to support the desired functionality - in particular, providing an alternative to an integrated multi-function control and display unit (MCDU) interface onboard an aircraft, as described herein. For ease of illustration and clarity, the various physical, electrical, and logical couplings and interconnections for these elements and features are not depicted in FIG. 1. Moreover, it should be appreciated that embodiments of the computing device 200 will include other elements, modules, and features that cooperate to support the desired functionality. For simplicity, FIG. 2 only depicts certain elements that relate to the techniques described in more detail below.

The at least one processor 202 may be implemented or performed with one or more general purpose processors, a content addressable memory, a digital signal processor, an application specific integrated circuit, a field programmable gate array, any suitable programmable logic device, discrete gate or transistor logic, discrete hardware components, or any combination designed to perform the functions described here. In particular, the at least one processor 202 may be realized as one or more microprocessors, controllers, microcontrollers, or state machines. Moreover, the at least one processor 202 may be implemented as a combination of computing devices, e.g., a combination of digital signal processors and microprocessors, a plurality of microprocessors, one or more microprocessors in conjunction with a digital signal processor core, or any other such configuration.

The at least one processor 202 is communicatively coupled to the system memory 204. The system memory 204 is configured to store any obtained or generated data associated with interception, translation, and transmission of MCDU format communications, and graphical elements associated with user interaction with avionic systems onboard the aircraft using MCDU format communications. The system memory 204 may be realized using any number of devices, components, or modules, as appropriate to the embodiment. Moreover, the computing device 200 could include system memory 204 integrated therein and/or a system memory 204 operatively coupled thereto, as appropriate to the particular embodiment. In practice, the system memory 204 could be realized as RAM memory, flash memory, EPROM memory, EEPROM memory, registers, a hard disk, a removable disk, or any other form of storage medium known in the art. In certain embodiments, the system memory 204 includes a hard disk, which may also be used to support functions of the computing device 200. The system memory 204 can be coupled to the at least one processor 202 such that the at least one processor 202 can read information from, and write information to, the system memory 204. In the alternative, the system memory 204 may be integral to the at least one processor 202. As an example, the at least one processor 202 and the system memory 204 may reside in a suitably designed application-specific integrated circuit (ASIC).

The user interface 206 may include or cooperate with various features to allow a user to interact with the computing device 200. Accordingly, the user interface 206 may include various human-to-machine interfaces, e.g., a keypad, keys, a keyboard, buttons, switches, knobs, a touchpad, a joystick, a pointing device, a virtual writing tablet, a touch screen, a microphone, a gesture recognition device, an eye tracker, a speaker, or any device, component, or function that enables the user to select options, input information, or otherwise control the operation of the computing device 200. For example, the user interface 206 could be manipulated by an operator to provide user input selections, commands, and/or data entry associated with operation of, or interaction with, one or more avionics systems onboard the aircraft, as described herein.

In certain embodiments, the user interface 206 may include or cooperate with various features to allow a user to interact with the computing device 200 via graphical elements rendered on a display element (e.g., the display device 214). Accordingly, the user interface 206 may initiate the creation, maintenance, and presentation of a graphical user interface (GUI). In certain embodiments, the display device 214 implements touch-sensitive technology for purposes of interacting with the GUI. Thus, a user can manipulate the GUI by moving a cursor symbol rendered on the display device 214, or by physically interacting with the display device 214 itself for recognition and interpretation, via the user interface 206. Similarly the display device 214 implements speech recognition, gesture recognition, and eye tracking technology to interact with avionics systems onboard the aircraft using MCDU format communications.

The communication device 208 is suitably configured to communicate data between the computing device 200 and one or more remote servers and one or more avionics systems onboard an aircraft. The communication device 208 may transmit and receive communications over Aeronautical Radio, Incorporated (ARINC) 739 network, an RS232 communication network, a wireless local area network (WLAN), the Internet, a satellite uplink/downlink, a cellular network, a broadband network, a wide area network, or the like. As described in more detail below, data received by the communication device 208 may include, without limitation: intercepted MCDU communications, graphical elements and text associated with one or more avionics systems and/or intercepted MCDU communications, and other data compatible with the computing device 200. Data provided by the communication device 208 may include, without limitation, user input data associated with one or more avionics systems onboard the aircraft, which has been translated into an MCDU format, or the like.

As described herein, the computing device 200 functions to replace an MCDU interface onboard the aircraft, and the communication device 208 establishes communication links to the input connections and output connections of the MCDU device. These communication links function as "interception" connections, wherein the communication device 208 intercepts and obtains data messages transmitted to the input connections of the MCDU, before the data messages reach the MCDU device. Thus, the computing device 200 receives, interprets, and processes data transmissions intended for receipt by the MCDU. Additionally, the communication device 208 is configured to transmit user input messages to the MCDU output connections, such that the computing device 200 provides MCDU output messages to the avionics systems onboard the aircraft using the same connections normally used by the MCDU device. Thus, the computing device 200 provides, via the communication device 208, user input data in an MCDU format, and the avionics systems receive the transmitted user input data as if the MCDU sent the user input data messages.

The MCDU communications module 210 is configured to intercept MCDU format communications transmitted by one or more avionics systems onboard the aircraft, and to interpret the intercepted MCDU format communications such that the MCDU format communications may be presented via the display device 214. Generally, data messages are transmitted to the MCDU from aircraft onboard avionics such that the avionics data, from the data messages, is presented to a user via the MCDU interface. However, as described herein, the computing device 200 functions as a replacement for the MCDU interface onboard the aircraft. Thus, the MCDU communications module 210 intercepts and re-directs, or otherwise obtains, the MCDU format communications, before the data transmissions that include the MCDU format communications reach the MCDU. Once intercepted, the MCDU communications module 210 interprets the received MCDU format messages. In order for the MCDU to recognize and use data messages transmitted to the MCDU from the avionics systems, the data messages are in an MCDU message format. The MCDU communications module 210 interprets the MCDU format messages to identify the content of the MCDU format messages and to determine an appropriate layout comprising graphical elements and text for presentation to the user via the display device 214.

The user input data module 212 is configured to receive user input interactions with presented avionics system data, and to translate the user input data into an MCDU format for transmission to avionics systems onboard the aircraft. The computing device 200 functions as a replacement for the MCDU interface onboard the aircraft by: (i) receiving input directed to the MCDU, as described with regard to the MCDU communications module 210; and (ii) providing MDCU formatted, user input data to avionics systems, wherein the provided user input data would normally be provided by the MCDU onboard the aircraft. As described herein, the user input data module 212 receives user input selections, commands, and data entry (via the user interface 206) applicable to one or more avionics systems, translates the user input data into a format compatible with MCDU communications, and transmits the user input data (via the communication device 208).

In practice, the MCDU communications module 210 and/or the user input data module 212 may be implemented with (or cooperate with) the at least one processor 202 to perform at least some of the functions and operations described in more detail herein. In this regard, the MCDU communications module 210 and/or the user input data module 212 may be realized as suitably written processing logic, application program code, or the like.

The display device 214 is configured to display various icons, text, and/or graphical elements associated with intercepted MCDU communications, graphical elements and text associated with one or more avionics systems and/or intercepted MCDU communications, or the like. In an exemplary embodiment, the display device 214 and the user interface 206 are communicatively coupled to the at least one processor 202. The at least one processor 202, the user interface 206, and the display device 214 are cooperatively configured to display, render, or otherwise convey one or more graphical representations or images associated with MCDU communications on the display device 214, as described in greater detail below. In an exemplary embodiment, the display device 214 is realized as an electronic display configured to graphically display MCDU communication data, as described herein. In some embodiments, the computing device 200 is an integrated computer system onboard an aircraft, and the display device 214 is located within a cockpit of the aircraft, and is thus implemented as an aircraft display. In other embodiments, the display device 214 is implemented as a display screen of a standalone, personal computing device (e.g., laptop computer, tablet computer). It will be appreciated that although the display device 214 may be implemented using a single display, certain embodiments may use additional displays (i.e., a plurality of displays) to accomplish the functionality of the display device 214 described herein.

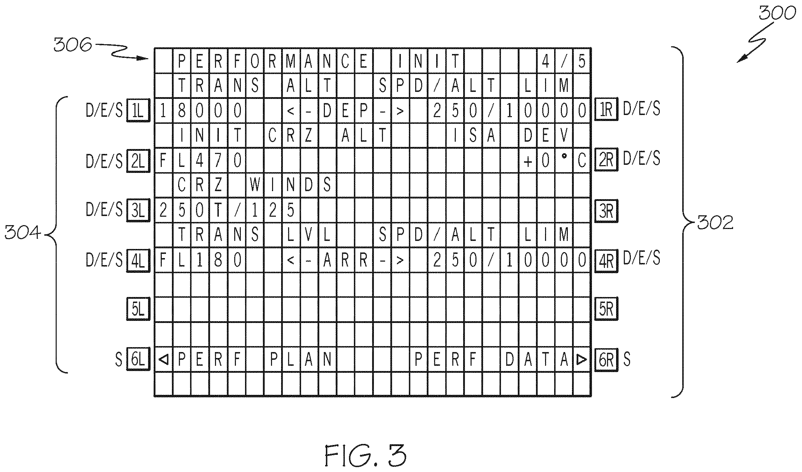

FIG. 3 is a diagram of a standard multi-function control and display unit (MCDU) interface 300, in accordance with the disclosed embodiments. It should be appreciated that FIG. 3 depicts a simplified embodiment of the MCDU interface 300, and that some implementations of the MCDU interface 300 may include additional elements or components. The MCDU interface 300 is a visible aspect of an MCDU device onboard the aircraft. The MCDU interface 300 is communicatively coupled to particular avionics systems onboard the aircraft, and is generally used as a user interface for such avionics systems, which may include, but are not limited to, Flight Management System (FMS), Communications Management Function (CMF), radio, circuit breakers (CB), and the like. Flight crew members may use the MCDU interface 300 to perform tasks associated with flight planning, navigation, guidance, and performance.

In exemplary embodiments of the present disclosure, the intercepted MCDU communications are formatted using the Aeronautical Radio, Incorporated (ARINC) 739 standard, which is a standard data format protocol for MCDU devices and avionics systems and applications that communicate with MCDU devices. In some embodiments, the avionics systems and applications are implemented using A739 aircraft subsystems, which exchange data with the MCDU device using an A429 bus, RS232, or the like. Typically, each aircraft subsystem defines several informational display pages, lines, and/or data fields that may be traversed and manipulated via a user interface that includes at least a page selection mechanism, "Line Select" keys, and "Mode" keys.

As shown, the MCDU interface 300 includes right-side line select keys (RLSK) 302 and left-side line select keys (LLSK) 304, which may be selected by a user to choose a particular line and data field of the current page shown by MCDU interface 300, such that the user may enter data into the selected data field. User interaction with the MCDU interface 300 includes navigation selections (e.g., page selections, mode selections, RLSK 302, LLSK 304), prompt selections, data entry, and the like. Generally, each distinct MCDU display page includes a title 306 identifying the page on a first or top line of the page. Each MCDU display page may also include navigation prompts to move to other pages, informational fields providing aircraft subsystem data (e.g., flight plans, aircraft performance data, navigational data, sensor data), and control fields allowing the user to direct the operation of the aircraft subsystem through line select keys. A selected or "active" aircraft subsystem (i.e., avionics system, avionics application) sends MCDU screen data to MCDU display pages, and the MCDU transmits a push-button word (PBW) to the active aircraft subsystem for each button press on the MCDU interface 300.

User interaction with the MCDU interface 300 is typically complex, requiring numerous navigation selections to enable user command selections or data entry at the appropriate page, line, and data field. However, the computing device (see FIGS. 1-2) described herein functions to replace the MCDU interface 300 with a streamlined and user-friendly graphical user interface (GUI) for user interaction with the aircraft onboard avionics systems.

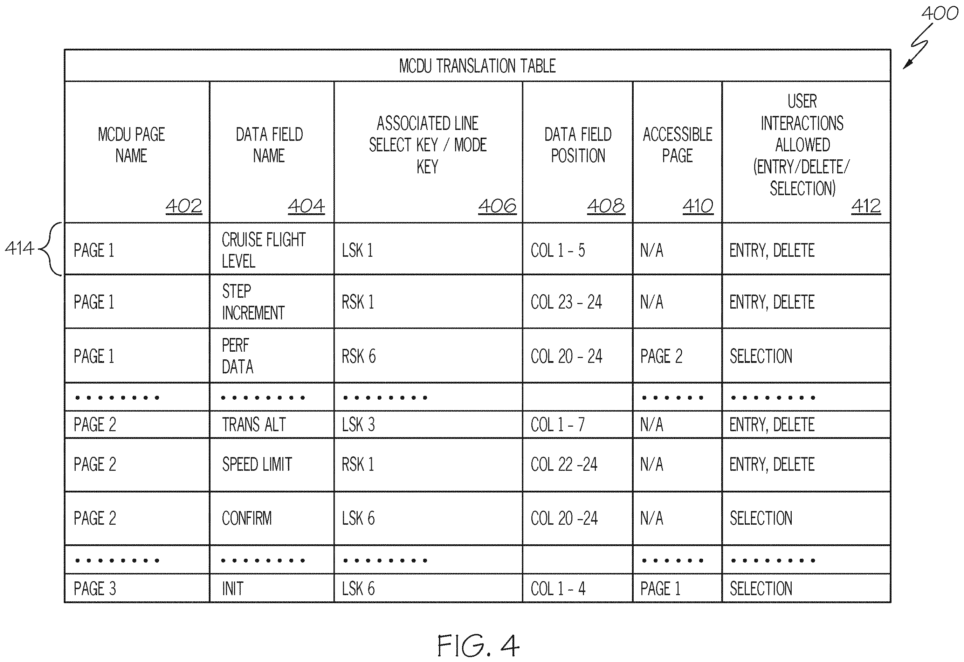

FIG. 4 is a diagram of multi-function control and display unit (MCDU) translation table 400, in accordance with the disclosed embodiments. The MCDU translation table 400 includes data associated with navigation of an MCDU interface (see FIG. 3), such as pages, lines, columns, keystrokes or selections for a user to navigate appropriate pages, lines, and columns, and permitted user interactions with each of the pages, lines, and columns. In the exemplary embodiment shown, the MCDU translation table 400 includes the following columns, without limitation, MCDU Page Name 402, Data Field Name 404, Associated Line Select Key/Mode Key 406, Data Field Position 408, Accessible Page 410, and User Interactions Allowed 412. Each row of the MCDU translation table 400 is associated with one particular data field of the MCDU interface. For example, the first row 414 of the MCDU translation table 400 includes detail associated with a Date Field Name 404 "Cruise Flight Level".

The MCDU Page Name 402 is a page number of the MCDU page associated with the "Cruise Flight Level" data field in the first row 414. In this example, the "Cruise Flight Level" data field is on the first page of the MCDU, wherein the first page is the first page presented to a user of the MCDU during navigation of the MCDU pages and data fields. Other example data fields, such as "Step Increment" and "Perf Data", are also located on the first page of the MCDU. Additional example data fields, such as "Trans Alt", "Speed Limit", and "Confirm" are located on the second page of the MCDU.

The Associated Line Select Key/Mode Key 406 indicates the appropriate button for the user to press, or the appropriate user selection to make, such that the associated data field (i.e., Data Field Name 404) is selected on the indicated page (i.e., MCDU Page Name 402). In order to select a particular data field (i.e., Data Field Name 404), the Associated Line Select Key/Mode Key 406 may require one or more button presses, screen selections, or other user interface selections. Here, the one or more button presses corresponds to the Data Field Position 408, which is a location of the data field (i.e., Data Field Name 404) on the associated MCDU page (i.e., MCDU Page Name 402). The Accessible Page 410 is an MCDU page that can be accessed upon pressing a Line Select/Mode Key 406 associated with the data field (i.e., Data Field Name 404). The User Interactions Allowed 412 indicates actions that a user is permitted to take to interact with a particular data field (i.e., Data Field Name 404). Examples of User Interactions Allowed 412 may include, without limitation, "Entry", "Delete", "Selection", or the like.

Typically, aircraft subsystems (e.g., Flight Management System (FMS), Communications Management Function (CMF), radio, circuit breakers (CB), Take-Off and Landing (TOLD) function, or other avionics systems) define several informational MCDU display pages and a user interface for traversing the MCDU display pages using existing Line Select Keys (LSK) and Mode keys. Each distinct display page includes a title identifying the page on one line, may include prompts to navigate to other MCDU display pages, informational fields (i.e., data fields) providing aircraft subsystem data (e.g., flight plans, aircraft performance data, navigational aids, sensor data), and control fields permitting a user to direct operation of the aircraft via button presses of Line Select Keys (LSK). An active aircraft subsystem sends MCDU screen data to display pages presented by the MCDU, and the MCDU transmits a push-button word (PBW) to the active aircraft subsystem for each button press on the MCDU.

As described herein, the MCDU translation table 400 is used by the system to convert or translate intercepted MCDU data such that the intercepted MCDU data may be presented by a computing device (reference 102, FIG. 1) for potential user interaction associated with one or more of the aircraft subsystems and/or relevant cockpit applications and other applications resident on the computing device (reference 102, FIG. 1).

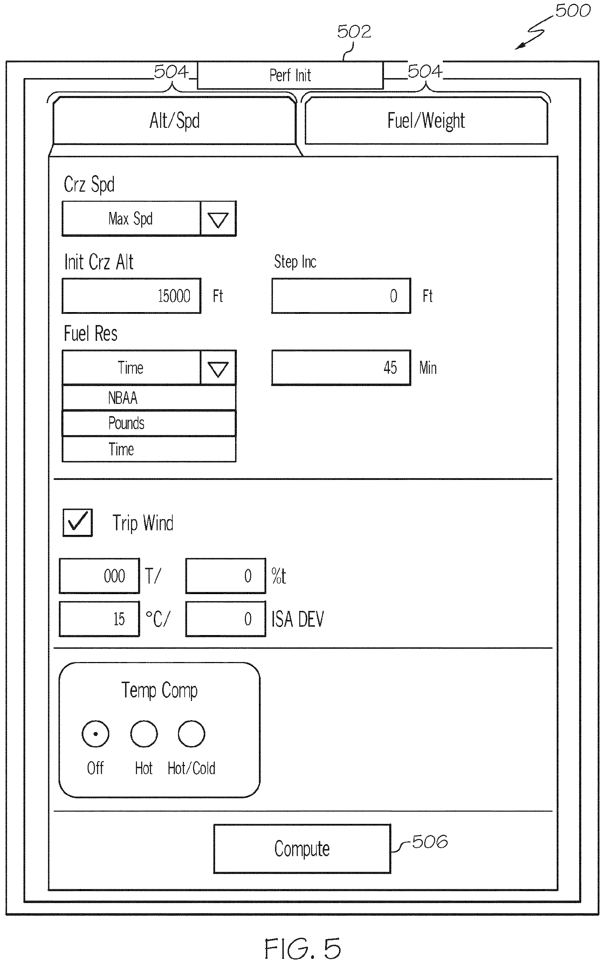

FIG. 5 is a diagram of a graphical user interface (GUI) 500 configured to present multi-function control and display unit (MCDU) translation data, in accordance with the disclosed embodiments. It should be noted that FIG. 5 depicts one exemplary embodiment of the GUI 500, and that some implementations of the GUI 500 may include a different set of graphical elements or components.

Here, the GUI 500 includes a title 502 associated with the MCDU data presented. In the exemplary embodiment shown, the title 502 is "Perf Init", which indicates that the GUI 500 is presenting, and permitting user interaction with, Performance Initialization data. The GUI 500 also presents user-selectable tabs 504, which, when selected, present data associated with "Alt/Spd" (i.e., altitude, speed) or "Fuel/Weight" of the aircraft. As shown, the GUI 500 presents Performance Initialization data (indicated by the title 502), including but not limited to, "Crz Spd" (i.e., cruise speed), "Init Crz Alt" (i.e., initial cruise altitude), "Step Inc" (i.e., step increment", "Fuel Res" (i.e., fuel reserve), "Trip Wind" (i.e., trip wind data), and "Temp Comp" (i.e., temperature compensation). Additionally, the GUI 500 presents a graphical element 506 labeled "Compute", which may be selected by a user to compute and refresh the Performance Initialization data for presentation to the user.

The GUI 500 is generally used to present intercepted MCDU data, to permit a user to interact with the intercepted MCDU data, and to receive user input interactions with aircraft subsystems and/or cockpit applications via the computing device (reference 102, FIG. 1).

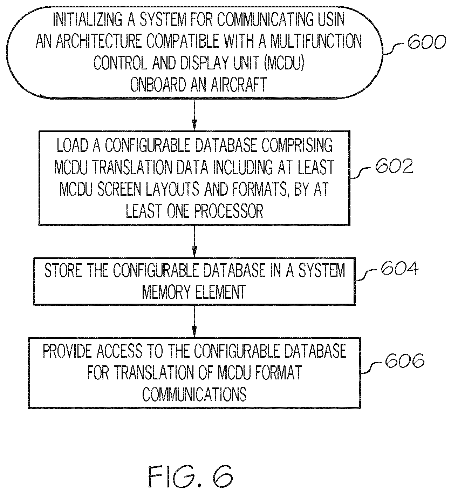

FIG. 6 is a flow chart that illustrates an embodiment of a process 600 for initializing a system for communicating using an architecture compatible with a multi-function control and display unit (MCDU) onboard an aircraft, in accordance with the disclosed embodiments. The architecture compatible with the MCDU includes, without limitation, a plurality of MCDU communication connections (e.g., MCDU input connections, MCDU output connections) which connect the MCDU to one or more avionics systems onboard the aircraft.

First, the process 600 loads a configurable database comprising MCDU translation data including at least MCDU screen layouts and formats, by at least one processor (step 602). As described previously with regard to FIG. 3, the MCDU interface includes numerous pages, and each page includes lines and data fields. Before a user can perform data entry into an MCDU interface page, or enter user selections or user commands via the MCDU interface, the user must navigate to the appropriate page, line, and/or data field. The configurable database includes MCDU screen layouts and formats, which define pages, lines, data fields, and data fields association with RLSK 302, LLSK 304, allowed user interactions (e.g., user data entry, user data deletion, user data selection) on the data fields of the MCDU interface. The configurable database also includes navigation data for the MCDU page hierarchy, which defines locations, button-presses, and user navigation selections required for a user to navigate through the MCDU interface to access particular pages, lines, and data fields.

Next, the process 600 stores the configurable database in a system memory element (step 604), for use in translating MCDU format communications and user input data in the future. The configurable database may be used to translate MCDU format communications that were originally transmitted via the plurality of MCDU communication connections (e.g., data messages transmitted from an avionics system to the MCDU device), and are thus translated from an MCDU format into a format for use by a computing device, a display, a user interface (e.g., a graphical user interface), or other element of a system that intercepts and interprets MCDU communications. The configurable database may also be used to translate user input data that is not in an MCDU format. In this situation, user input data may be provided by a user via a user interface (e.g., a speech interface, gesture interface, eye tracking interface) or GUI of a computing device that uses interception connections to transmit data messages using the MCDU communication connections. Here, the user input data may be translated into an MCDU format, using the configurable database, such that the translated user input data messages may be transmitted to one or more avionics systems in an MCDU format, as if the user input data was received via the MCDU interface. Thus, the communication architecture of the aircraft may be used without modification, while providing the user a more streamlined, user-friendly, and less cumbersome interface than the original MCDU interface.

The process 600 then provides access to the configurable database for translation of MCDU format communications (step 406). Access to the database may be granted to one or more computing devices (see FIGS. 1-2), wherein the computing device is used as a replacement for the MCDU interface used by the flight crew to interact with the avionics systems onboard the aircraft.

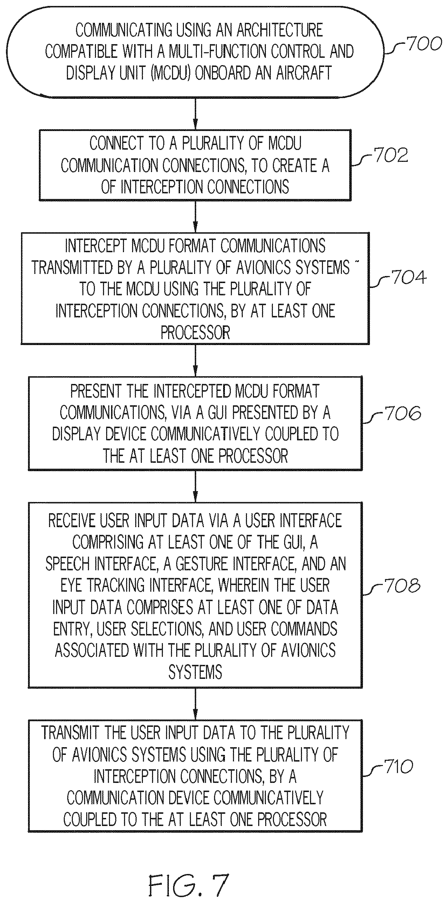

FIG. 7 is a flow chart that illustrates an embodiment of a process 700 for communicating using an architecture compatible with a multi-function control and display unit (MCDU) onboard an aircraft, in accordance with the disclosed embodiments. The process 700 connects to a plurality of MCDU communication connections, to create a plurality of interception connections (step 702), the process 700 intercepts MCDU communications transmitted by a plurality of avionics systems to the MCDU using the plurality of interception connections, by the at least one processor (step 704). The MCDU communication connections may include MCDU input connections, links, or ports configured to receive data messages created by one or more avionics systems onboard the aircraft and transmitted to the MCDU device. Here, the process 700 links to the MCDU input connections to create "interception connections" by which the process 700 gains access to data messages transmitted to the MCDU device. Using the interception connections, the process 700 redirects, observes, copies, or otherwise obtains data messages transmitted by the avionics systems and intended for use by the MCDU device.

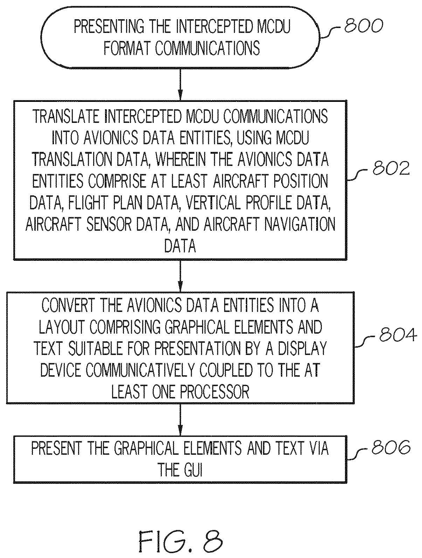

The process 700 presents the intercepted MCDU communications, via a graphical user interface (GUI) presented by a display device communicatively coupled to the at least one processor (step 706). One suitable methodology for presenting the intercepted MCDU communications is described below with reference to FIG. 8. The process 700 receives user input data via the GUI, wherein the user input data comprises at least one of data entry, user selections, and user commands associated with the plurality of avionics systems (step 708). Data messages may include any avionics system data, aircraft status data, or other data relevant to the operation of the aircraft which is normally presented by the MCDU interface such that a user may view and/or interact (e.g., provide user input selections, commands, or data entry) with the presented data messages via the MCDU interface. Here, the process 700 has intercepted the data messages (step 704), presented the data messages using a GUI instead of the MCDU that is normally used (step 706), and receives user interactions with the data messages (step 708). In some embodiments, the process 700 may receive user input data via another user interface in addition to the GUI. For example, the process 700 may receive user input data via a speech recognition interface, a gesture recognition interface, eye tracking interface, a touchscreen interface, or the like.

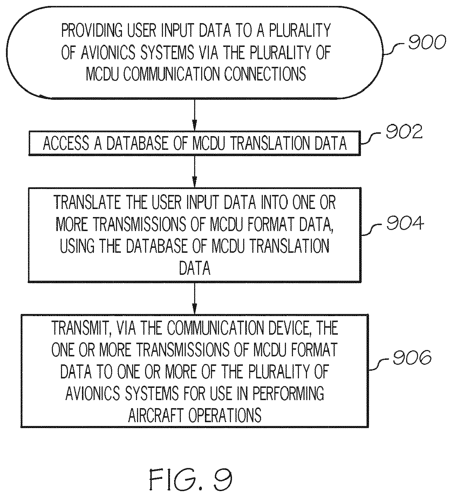

The process 700 transmits the user input data to the plurality of avionics systems using the plurality of interception connections (step 710). One suitable methodology for transmitting or providing the user input data to the plurality of avionics systems is described below with reference to FIG. 9. In some embodiments, the process 700 may receive user input data via another user interface in addition to the GUI. For example, the process 700 may receive user input data via a speech recognition interface, a gesture recognition interface, eye tracking interface, a touchscreen interface, or the like. In this situation, the process 700 also translates the user input data into MCDU format data, using MCDU translation data, and transmits the MCDU format data to the one or more of the plurality of avionics systems for use in performing aircraft operations. By transmitting the user input data from the GUI (or other user interface), the process 700 has bypassed the MCDU interface that would normally present the avionics system data and receive user input interactions for use by the avionics systems in performing aircraft operations.

FIG. 8 is a flow chart that illustrates an embodiment of a process 800 for presenting the intercepted multi-function control and display unit (MCDU) format communications, in accordance with the disclosed embodiments. It should be appreciated that the process 800 described in FIG. 8 represents one embodiment of step 706 described above in the discussion of FIG. 7, including additional detail.

The process 800 translates intercepted MCDU communications into avionics data entities, using MCDU translation data, wherein the avionics data entities comprise at least aircraft position data, flight plan data, vertical profile data, aircraft sensor data, and aircraft navigation data (step 802). As described previously with regard to FIG. 3, the MCDU interface includes numerous pages, and each page includes lines and data fields. Before a user can perform data entry into an MCDU interface page, or enter user selections or user commands via the MCDU interface, the user must navigate to the appropriate page, line, and/or data field. The configurable database includes MCDU screen layouts and formats, which define pages, lines, and data fields associated with the MCDU interface. The configurable database also includes navigation data for the MCDU, which defines locations, button-presses, and user navigation selections required for a user to navigate through the MCDU interface to access particular pages, lines, and data fields.

Here, the intercepted MCDU format communications are data messages transmitted from one or more avionics systems. These data messages may include, without limitation, aircraft position data, flight plan data, vertical profile data, aircraft sensor data, aircraft navigation data, and the like. The process 800 uses the screen layouts and formats, and MCDU interface navigation data associated with the intercepted MCDU communications to interpret or identify the contents of the data messages and to convert the contents of the data messages into data entities that are compatible with, and usable by, a computing device used as a replacement for a standard MCDU interface (see FIGS. 1-2).

The process 800 converts the avionics data entities into a layout comprising graphical elements and text suitable for presentation by a display device communicatively coupled to the at least one processor (step 804), and presents the graphical elements and text via the GUI. Here, the process 800 creates components of the graphical user interface (GUI) for presentation to the user, wherein each of the components is configured to present avionics system data for user viewing and user interaction.

FIG. 9 is a flow chart that illustrates an embodiment of a process 900 for providing user input data to a plurality of avionics systems via the plurality of multi-function control and display unit (MCDU) communication connections, in accordance with the disclosed embodiments. It should be appreciated that the process 900 described in FIG. 9 represents one embodiment of step 710 described above in the discussion of FIG. 7, including additional detail. Generally, the user input data has been received by the process 900 via at least one of a speech interface, gesture recognition interface, eye tracking interface, and a graphical user interface (GUI) presented by a computing device implemented as a replacement for an MCDU interface.

The process 900 accesses a database of MCDU translation data (step 902), and translates the user input data into one or more transmissions of MCDU format data, using the database of MCDU translation data (step 904). As described previously with regard to FIG. 4, the database of MCDU translation data is a configurable database including at least MCDU screen layouts and formats and navigation data associated with an MCDU interface. The process 900 uses the translation data to identify the appropriate MCDU interface pages, lines, and/or data fields associated with the user input data, and to convert the user input data from the current format (used by the computing device functioning as a replacement for the MCDU interface) into the MCDU format that is recognized and used by the MCDU device.

The process then 900 transmits, via the communication device, the one or more transmissions of MCDU format data to one or more of the plurality of avionics systems for use in performing aircraft operations (step 906). The process 900 has first translated the user input data into an MCDU format usable by the avionics systems and cockpit applications onboard the aircraft (step 904), and then used physical MCDU communication connections to transmit the translated messages to the avionics systems that use the data (step 906). Here, the data is first converted into an MCDU format such that the data appears to have been generated by the MCDU interface, and then the data is transmitted using the physical MCDU communication connections such that the avionics systems receive the MCDU format data as if the MCDU device transmitted the data. Thus, the process 900 permits user interaction with avionics data using a computing device instead of an MCDU interface, wherein the avionics data would normally be presented and receive user interaction via the MCDU interface.

The various tasks performed in connection with processes 600-900 may be performed by software, hardware, firmware, or any combination thereof. For illustrative purposes, the preceding description of processes 600-900 may refer to elements mentioned above in connection with FIGS. 1-5. In practice, portions of processes 600-900 may be performed by different elements of the described system. It should be appreciated that processes 600-900 may include any number of additional or alternative tasks, the tasks shown in FIGS. 6-9 need not be performed in the illustrated order, and processes 600-900 may be incorporated into a more comprehensive procedure or process having additional functionality not described in detail herein. Moreover, one or more of the tasks shown in FIGS. 6-9 could be omitted from embodiments of the processes 600-900 as long as the intended overall functionality remains intact.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memoiy locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

The following description refers to elements or nodes or features being "connected" or "coupled" together. As used herein, unless expressly stated otherwise, "coupled" means that one element/node/feature is directly or indirectly joined to (or directly or indirectly communicates with) another element/node/feature, and not necessarily mechanically. Likewise, unless expressly stated otherwise, "connected" means that one element/node/feature is directly joined to (or directly communicates with) another element/node/feature, and not necessarily mechanically. Thus, although the schematic shown in FIG. 2 depicts one exemplary arrangement of elements, additional intervening elements, devices, features, or components may be present in an embodiment of the depicted subject matter.

For the sake of brevity, conventional techniques related to signal processing, data transmission, signaling, network control, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A method for communicating using an architecture compatible with a multi-function control and display unit (MCDU) onboard an aircraft, the method comprising:
intercepting MCDU format communications transmitted by a plurality of avionics systems to the MCDU using a plurality of MCDU communication connections, by at least one processor;
presenting the intercepted MCDU format communications, via a graphical user interface (GUI) presented by a display device communicatively coupled to the at least one processor;
receiving user input data via the GUI, wherein the user input data comprises at least one of data entry, user selections, and user commands associated with the plurality of avionics systems; and
transmitting the user input data to the plurality of avionics systems using the plurality of MCDU communication connections, by a communication device communicatively coupled to the at least one processor.

2. The method of Claim 1, further comprising:
after intercepting the MCDU format communications, translating the MCDU format communications into avionics data entities using MCDU translation data, wherein the avionics data entities comprise at least aircraft position data, flight plan data, vertical profile data, aircraft sensor data, aircraft performance data and aircraft navigation data; and
converting the avionics data entities into a layout comprising graphical elements and text suitable for presentation by a display device communicatively coupled to the at least one processor;
wherein presenting the intercepted MCDU format communications further comprises presenting the graphical elements and text, via a graphical user interface (GUI) presented by the display device.

3. The method of Claim 2, further comprising:
identifying a plurality of cockpit applications relevant to the avionics data entities, by the at least one processor, wherein the plurality of cockpit applications perform operations associated with at least one of flight mission planning tasks, flight path optimization, trajectory optimization, fuel optimization, advisory generation, data visualization, and situational awareness onboard the aircraft; and
providing the avionics data entities to the plurality of cockpit applications;
wherein the plurality of cockpit applications are configured to use the avionics data entities during performance of the operations.

4. The method of Claim 1, further comprising:
translating, by the at least one processor, the user input data into one or more transmissions of MCDU format data, using MCDU translation data; and
transmitting, via the communication device, the one or more transmissions of MCDU format data to one or more of the plurality of avionics systems for use in performing aircraft operations.

5. The method of Claim 4, further comprising:
loading, by the at least one processor, a configurable database comprising MCDU translation data including at least MCDU screen layouts and formats; and
storing the configurable database in the system memory element;
wherein the MCDU format communications are translated into avionics data entities using the configurable database, wherein the avionics data entities comprise at least aircraft position data, flight plan data, vertical profile data, aircraft sensor data, and aircraft navigation data.

6. The method of Claim 1, further comprising:
receiving a second set of user input data via a user interface comprising at least one of a speech recognition interface, a gesture recognition interface, an eye tracking interface, and a touchscreen interface;
translating the second set of user input data into a second set of transmissions of MCDU format data, using MCDU translation data; and
transmitting, via the communication device, the second set of transmissions of MCDU format data to the one or more of the plurality of avionics systems for use in performing aircraft operations.

7. The method of Claim 1, further comprising:
connecting to a plurality of multi-function display unit (MCDU) communication connections, to create a plurality of interception connections, via the communication device configured to transmit data using at least one of wired communication connections and wireless communication connections;
wherein intercepting the MCDU format communications is performed using the interception connections; and
wherein the user input data is transmitted to the plurality of MCDU communication connections via the plurality of interception connections.

8. A computing device configured to communicate using an architecture compatible with a multi-function control and display unit (MCDU) onboard an aircraft, the computing device comprising:
a system memory element, configured to store MCDU translation data;
a communication device configured to transmit and receive data using a plurality of MCDU communication connections;
a display device configured to present a graphical user interface (GUI); and
at least one processor communicatively coupled to the system memory element, the communication device, and the display device, the at least one processor configured to:
intercept MCDU format communications transmitted by the plurality of avionics systems to the MCDU using the plurality of MCDU communication connections, via the communication device;
present the intercepted MCDU format communications, via the graphical user interface (GUI);
receive user input data via the GUI, wherein the user input data comprises at least one of data entry, user selections, and user commands associated with the plurality of avionics systems; and
transmit, via the communication device, the user input data to the plurality of avionics systems using the plurality of MCDU communication connections.

9. The computing device of Claim 8, wherein, after intercepting the MCDU format communications, the at least one processor is further configured to:
translate the MCDU format communications into avionics data entities using MCDU translation data, wherein the avionics data entities comprise at least aircraft position data, flight plan data, vertical profile data, aircraft sensor data, and aircraft navigation data;
convert the avionics data entities into a layout comprising graphical elements and text suitable for presentation by the display device; and
present the intercepted MCDU format communications by presenting the graphical elements and text, via the graphical user interface (GUI).

10. The computing device of Claim 9, wherein the at least one processor is further configured to:
identify a plurality of cockpit applications relevant to the avionics data entities, wherein the plurality of cockpit applications perform operations associated with at least one of flight mission planning tasks, flight path optimization, trajectory optimization, fuel optimization, advisory generation, data visualization, and situational awareness onboard the aircraft; and
provide the avionics data entities to the plurality of cockpit applications;
wherein the plurality of cockpit applications are configured to use the avionics data entities during performance of the operations.

11. The computing device of Claim 8, wherein the at least one processor is further configured to:
translate the user input data into one or more transmissions of MCDU format data, using MCDU translation data; and
transmit, via the communication device, the one or more transmissions of MCDU format data to one or more of the plurality of avionics systems for use in performing aircraft operations.

12. The computing device of Claim 11, wherein the at least one processor is further configured to:
load a configurable database comprising the MCDU translation data including at least MCDU screen layouts and formats;
store the configurable database in the system memory element; and
translate the MCDU format communications into avionics data entities using the configurable database, wherein the avionics data entities comprise at least aircraft position data, flight plan data, vertical profile data, aircraft sensor data, and aircraft navigation data.

13. The computing device of Claim 8, further comprising a user interface comprising at least one of a speech recognition interface, a gesture recognition interface, and a touchscreen interface;
wherein the at least one processor is further configured to:
receive a second set of user input data via the user interface;
translate the second set of user input data into a second set of transmissions of MCDU format data, using MCDU translation data; and
transmit, via the communication device, the second set of transmissions of MCDU format data to the one or more of the plurality of avionics systems for use in performing aircraft operations.

14. The computing device of Claim 8, wherein the at least one processor is further configured to:
connect to a plurality of multi-function display unit (MCDU) communication connections, to create a plurality of interception connections, via the communication device; intercept the MCDU format communications using the interception connections; and transmit the user input data to the plurality of MCDU communication connections via the plurality of interception connections.
